# EUROPÄISCHE PATENTANMELDUNG

(11) **EP 4 296 038 A1**
(43) Veröffentlichungstag der Anmeldung: **27.12.2023**
(21) Anmeldenummer: 23164292.7
(22) Anmeldetag: 27.03.2023
(51) Int. Cl.: B29C 49/46, B29C 49/42, B29C 49/06, B29K 67/00, B29L 31/00, B29C 49/36

(54) **Z-MODUL**

(30) Priorität: 13.07.2022 DE 102022117513
(71) Anmelder: Krones AG, 93073 Neutraubling (DE)
(72) Erfinder: Brikmann, Max, 93073 Neutraubling (DE); Geltinger, Florian, 93073 Neutraubling (DE); Soellner, Juergen, 93073 Neutraubling (DE)
(74) Vertreter: Hannke Bittner & Partner mbB Regensburg

(57) **Zusammenfassung**

Die Erfindung betrifft eine Vorrichtung (1) zum Behandeln von Kunststoffbehältnissen mit einer Transporteinrichtung, welche die Kunststoffbehältnisse entlang eines vorgegebenen Transportpfads transportiert, mit einem Blasmodul (10), welches eine Blasformmaschine (12) zum Umformen von Kunststoffvorformlingen zu Kunststoffbehältnissen aufweist und mit einen Füllermodul (20), welches eine Fülleinrichtung (22) zum Befüllen von Kunststoffbehältnissen mit einem insbesondere flüssigen Produkt aufweist, wobei das Blasmodul (10) und das Füllermodul (20) eine Schnittstelle aufweisen, welche eine Anordnung des Blasmoduls (10) und des Füllermoduls (20) aneinander ermöglicht und wobei die Kunststoffbehältnisse von dem Blasmodul (10) an das Füllermodul (20) übergebbar sind, wobei die Vorrichtung (1) innerhalb eines Reinraums angeordnet ist. Erfindungsgemäß sind das Blasmodul (10) und das Füllermodul (20) unmittelbar aneinander angrenzend angeordnet, wobei das Blasmodul (10) auslaufseitig einen Transportstern (16) aufweist, welcher als Teilungsverzugsstern ausgebildet ist und die Kunststoffbehältnisse direkt von dem Teilungsverzugsstern des Blasmoduls (10) an das Füllermodul (20) übergebbar sind.

## Beschreibung

Die vorliegende Erfindung bezieht sich auf eine Vorrichtung und ein Verfahren zum Behandeln von Kunststoffbehältnissen, insbesondere zur Herstellung von Kunststoffbehältnissen und zum Befüllen dieser mit einem insbesondere flüssigen Produkt unter aseptischen Bedingungen.

Aus dem Stand der Technik sind seit langem Blasformmaschinen und Fülleinrichtungen in nicht-aseptischer und aseptischer Ausführung bekannt. Oft werden diese in modularer Bauweise in Kombination miteinander ausgeführt (Blasmaschine-Füller-Block). Zwischen den Ausführungsformen der aseptischen und nicht-aseptischen Anlagen bestehen erhebliche Unterschiede, beispielsweise bedingt durch den erforderlichen Reinraum einer aseptischen Anlage und dem damit verbundenen technischen Aufwand. So weist ein aseptisches Blasmodul auslaufseitig typischerweise einen Teilungsverzugsstern und einen Teilungswechselstern auf und ein aseptisches Füllermodul weist fünf Transportsterne auf, wobei wenigstens einer als Teilungsverzugsstern ausgeführt ist. Eine Übergabe von Kunststoffbehältnissen erfolgt hierbei direkt von dem Teilungswechselstern des Blasmoduls an die Transportsterne des Füllermoduls.

Im Gegensatz hierzu weist ein nicht-aseptisches Blasmodul nur einen Teilungsverzugsstern auf, wobei auf den Teilungswechselstern verzichtet werden kann. Weiterhin ist bei nicht-aseptischen Anlagen die Verwendung eines Orientierungsstern zur Ausrichtung der Kunststoffbehältnisse vor der Befüllung bekannt.

Da sich im Allgemeinen mit der Zahl der Transportsterne, insbesondere bei dem Einbau zusätzlicher spezieller Transportsterne (z.B. Orientierungsstern) das Layout einer Anlage verändert bzw. vergrößert und im Falle einer aseptischen Anlage die Anforderungen an den Reinraum und der entsprechende technische Aufwand erheblich erhöht werden, gehen die Bestrebungen bei der Entwicklung neuer Anlagen dahin, die Anzahl der verwendeten Transportsterne auf ein Minimum zu reduzieren und die räumliche Ausdehnung einer solchen Anlage zu minimieren.

Daher stellt sich die vorliegende Erfindung die Aufgabe, eine Vorrichtung und ein Verfahren für eine aseptische Anlage zum Herstellen und Befüllen von Kunststoffbehältnissen bereitzustellen, welche im Vergleich zum Stand der Technik einen verringerten technischen Aufwand benötigt und zugleich eine erhöhte Variabilität zur Anpassung an Kundenwünsche ermöglicht.

Erreicht wird diese Aufgabe erfindungsgemäß durch zwei Vorrichtungen und zwei Verfahren nach den unabhängigen Patentansprüchen. Vorteilhafte Ausführungsformen und Weiterbildungen sind Gegenstand der Unteransprüche.

Eine erfindungsgemäße Vorrichtung zum Behandeln von Kunststoffbehältnissen weist eine Transporteinrichtung auf, welche die Kunststoffbehältnisse entlang eines vorgegebenen Transportpfads transportiert. Weiterhin weist die Vorrichtung ein Blasmodul auf, welches eine Blasformmaschine, insbesondere eine Streckblasformmaschine, zum Umformen von Kunststoffvorformlingen zu Kunststoffbehältnissen aufweist. Weiterhin ist ein Füllermodul vorgesehen, welches eine Fülleinrichtung zum Befüllen von Kunststoffbehältnissen mit einem insbesondere flüssigen Produkt aufweist, wobei das Blasmodul und das Füllermodul eine Schnittstelle aufweisen, welche eine Anordnung des Blasmoduls und des Füllermoduls aneinander ermöglicht und wobei die Kunststoffbehältnisse von dem Blasmodul an das Füllermodul übergebbar sind. Weiterhin ist die Vorrichtung innerhalb eines Reinraums angeordnet.

Erfindungsgemäß sind das Blasmodul und das Füllermodul unmittelbar aneinander angrenzend angeordnet, wobei das Blasmodul auslaufseitig einen Transportstern aufweist, welcher als Teilungsverzugsstern ausgebildet ist und die Kunststoffbehältnisse direkt von dem Teilungsverzugsstern des Blasmoduls an das Füllermodul übergebbar sind.

Bevorzugt handelt es sich bei den Kunststoffbehältnissen um Kunststoffflaschen und besonders bevorzugt um PET-Flaschen.

Bevorzugt weist die Vorrichtung einen modularen Aufbau auf. Bevorzugt weist die Vorrichtung ein Blasmodul und ein Füllermodul auf. Es wäre auch denkbar, dass die erfindungsgemäße Vorrichtung Teil einer größeren Anlage ist und mit weiteren Modulen zum Verschließen der Kunststoffbehältnisse, zum Etikettieren der Kunststoffbehältnisse und zum Verpacken der Kunststoffbehältnisse verbunden sein.

Bevorzugt ist die Vorrichtung in einem Reinraum angeordnet und besonders bevorzugt ist die Vorrichtung derart ausgestaltet, dass die einen aseptischen Korridor aufweist innerhalb dessen die Herstellung von Kunststoffbehältnissen, der Transport und ein Befüllen der Kunststoffbehältnisse unter aseptischen Bedingungen erfolgt, während Bestandteile der Vorrichtung, welche nicht notwendigerweise innerhalb des Reinraums angeordnet sein müssen, außerhalb des Reinraums angeordnet sind. Dies betrifft beispielsweise die Antriebe der Transporteinrichtungen, Zuleitungen für fließfähige Medien und dergleichen. Bevorzugt ist wenigstens eine Reinraumgrenze, insbesondere bei rotierenden Bestandteilen der Vorrichtung als Wasserschloss ausgeführt.

Bevorzugt weist das Blasmodul eine aseptische Blasformmaschine und besonders bevorzugt eine aseptische Streckblasformmaschine auf. Bevorzugt sind dem Blasmodul zuvor sterilisierte und erwärmte Kunststoffvorformlinge zuführbar, welche innerhalb des Blasmoduls durch Beaufschlagung mit einem fließfähigen Medium zu Kunststoffbehältnissen umformbar sind. Weiterhin weist das Blasmodul bevorzugt auslaufseitig (stromabwärts im Anschluss an die Blasformmaschine) einen Auslaufstern auf, welche die neu hergestellten Kunststoffbehältnisse von der Blasformmaschine übernimmt. Bevorzugt handelt es sich bei dem Auslaufstern um einen Teilungsverzugsstern. Bei einer vorteilhaften Ausführungsform weist das Blasmodul auslaufseitig nur einen einzigen Transportstern auf, welcher als Teilungsverzugsstern ausgebildet ist, während im Stand der Technik das Blasmodul auslaufseitig zusätzlich einen weiteren Transportstern aufweist, welcher beispielsweise als Teilungswechselstern ausgebildet ist. Die vorliegende Erfindung bietet daher den Vorteil, dass auf diesen zusätzlichen Transportstern verzichtet werden kann, wodurch der technische Aufwand und die damit verbundenen Kosten reduziert werden können.

Im Zusammenhang mit der vorliegenden Erfindung wird unter einem Teilungsverzugsstern ein Transportstern verstanden, welcher bei der Übergabe von Kunststoffbehältnissen eine Teilung (Kreisteilung des Transportsterns) beibehält und von jeder Teilung auf jede Teilung (1:1) übergibt, aber zeitgleich den Abstand zwischen zwei aufeinander folgenden Kunststoffbehältnissen vergrößert bzw. verkleinert, was einer Vergrößerung bzw. Verkleinerung des entsprechenden Teilkreises entspricht.

Weiterhin wird im Zusammenhang mit der vorliegenden Erfindung unter einem Teilungswechselstern ein Transportstern verstanden, welcher bei der Übergabe von Kunststoffbehältnissen eine Teilung verändert, beispielsweise von jeder zweiten Teilung auf jede Teilung (2:1) oder von jeder Teilung auf jede Teilung (1:1). Bevorzugt ist der Teilungswechselstern manuell oder automatisch umschaltbar.

Bevorzugt weist das Füllermodul eine aseptische Fülleinrichtung zum Befüllen von Kunststoffbehältnissen mit einem insbesondere flüssigen Produkt und eine Vielzahl von Transportsternen für den Transfer der Kunststoffbehältnisse zwischen dem Blasmodul und der Fülleinrichtung auf. Bei einer vorteilhaften Ausführungsform weist das Füllermodul für den Transfer der Kunststoffbehältnisse zwischen dem Blasmodul und der Fülleinrichtung maximal vier Transportsterne und bevorzugt weniger als vier Transportsterne auf. Im Vergleich hierzu werden im Stand der Technik typischerweise fünf oder mehr Transportsterne verwendet.

Bevorzugt handelt es sich bei dem Blasmodul um ein aseptisches Blasmodul und bei Füllermodul um ein aseptisches Füllermodul. Bevorzugt weisen die beiden Module eine komplementäre Schnittstelle auf, welche eine Anordnung des Blasmoduls und des Füllermoduls unmittelbar aneinander ermöglicht. Bevorzugt ist die Schnittstelle derart gestaltet, dass in einem aneinander angeordneten Zustand der beiden Module die Reinraumgrenzen dieser aneinander angrenzen und der noch vorhandene Spalt zwischen diesen luftdicht versiegelbar ist. Bevorzugt erfolgt eine solche Versiegelung durch Verschweißen.

Bei einer vorteilhaften Ausführungsform sind die Kunststoffbehältnisse direkt von dem auslaufseitigen Transportstern des Blasmoduls, welcher bevorzugt als Teilungsverzugsstern ausgestaltet ist, an das Füllermodul und genauer gesagt an die Transportsterne des Füllermoduls übergebbar. Bei einer vorteilhaften Ausführungsform weist das Füllermodul wenigstens drei Transportsterne auf, wobei ein erster Transportstern des Füllermoduls ein Teilungsverzugsstern ist und/oder ein zweiter Transportstern des Füllermoduls ein Teilungswechselstern ist. Eine Bezeichnung der Transportsterne als erster oder zweiter Transportstern hat nichts mit einer vorgegebenen Reihenfolge der Transportsterne zu tun.

Bevorzugt sind die Kunststoffbehältnisse von einer Teilung des Blasformmaschine auf eine Teilung der Fülleinrichtung übergebbar und besonders bevorzugt durch den Teilungswechselstern des Füllermoduls. Bevorzugt ist ein Teilungsabstand (zwischen zwei aufeinander folgenden transportierten Kunststoffbehältnissen) durch einen Teilungsverzugsstern und bevorzugt durch mehr als einen Teilungsverzugsstern veränderbar. Hierbei ist es denkbar, dass der Teilungsabstand in mehreren Schritten veränderbar ist, beispielsweise durch einen ersten Teilungsverzugsstern (als auslaufseitiger Teil des Blasmoduls) und durch einen zweiten Teilungsverzugsstern, welcher beispielsweise als Einlaufstern der Fülleinrichtung ausgeführt ist. Es wäre auch denkbar, ein weiterer Transportstern des Füllermoduls als Teilungsverzugsstern ausgeführt ist.

Wie oben ausgeführt weisen das Blasmodul und das Füllermodul eine Schnittstelle auf, welche eine Anordnung der beiden Module direkt aneinander ermöglicht, wodurch die Reinraumgrenzen der beiden Module aneinander anfügbar sind. Dies bietet den Vorteil, dass dadurch der Reinraum konstruktiv wesentlich einfacher gestaltet werden kann und auch der technische Aufwand zur Aufrechterhaltung der aseptischen Bedingungen reduziert werden kann. Durch eine solche modulare Bauweise und die entsprechenden Schnittstellen der einzelnen Module ist es möglich zwischen das Blasmodul und das Füllermodul ein weiteres Modul "einzuschieben", welches ebenfalls komplementäre Schnittstellen aufweist.

Daher ist die vorliegende Erfindung ebenfalls gerichtet auf eine Vorrichtung zum Behandeln von Kunststoffbehältnissen mit einer Transporteinrichtung, welche die Kunststoffbehältnisse entlang eines vorgegebenen Transportpfads transportiert. Weiterhin weist die Vorrichtung ein Blasmodul auf, welches eine Blasformmaschine zum Umformen von Kunststoffvorformlingen zu Kunststoffbehältnissen aufweist und ein Füllermodul, welches eine Fülleinrichtung zum Befüllen von Kunststoffbehältnissen mit einem insbesondere flüssigen Produkt aufweist. Weiterhin sind die Kunststoffbehältnisse von dem Blasmodul an das Füllermodul übergebbar, wobei die Vorrichtung innerhalb eines Reinraums angeordnet ist.

Erfindungsgemäß ist zwischen dem Blasmodul und dem Füllermodul eine Übergabeeinrichtung zum Übergeben der Kunststoffbehältnisse angeordnet, wobei das Blasmodul auslaufseitig einen Transportstern aufweist, welcher bevorzugt als Teilungsverzugsstern ausgebildet ist.

Bei der Übergabeeinrichtung handelt es sich bevorzugt um ein separates Modul, welches als Reinraum ausgestaltet ist. Bevorzugt weist die Übergabeeinrichtung Schnittstellen auf, welche komplementär zu den Schnittstellen des Blasmoduls und des Füllermoduls sind. Bevorzugt sind in einem montierten Zustand der Übergang von der Übergabeeinrichtung zum Blasmodul bzw. zum Füllermodul luftdicht versiegelbar. Bevorzugt wird dieser Übergang bei dem Montieren der Anlage verschweißt.

Bei einer vorteilhaften Ausführungsform weist das Füllermodul wenigstens drei Transportsterne auf, wobei wenigstens ein erster Transportstern des Füllermoduls ein Teilungsverzugsstern ist. Bevorzugt sind die wenigstens drei Transportsterne derart angeordnet, dass die Kunststoffvorformlinge von der Übergabeeinrichtung über die wenigstens drei Transportsterne an die Fülleinrichtung übergebbar sind. Bei einer vorteilhaften Ausführungsform weist die Übergabeeinrichtung wenigstens zwei Transportsterne auf.

Bei einer weiteren vorteilhaften Ausführungsform ist ein zweiter Transportstern des Füllermoduls ein Teilungswechselstern und/oder ein erster Transportstern der Übergabeeinrichtung ist ein Orientierungsstern. Unter einem Orientierungsstern wird in diesem Zusammenhang ein Transportstern verstanden, welcher dazu dient, die von dem auslaufseitigen Teilungsverzugsstern des Blasmoduls übernommenen Kunststoffbehältnisse für eine nachfolgende Befüllung korrekt auszurichten.

Die Verwendung einer Übergabeeinrichtung als separat einfügbares Modul bietet den Vorteil, dass bei der Planung einer Anlage leichter auf Kundenwünsche reagiert werden kann. Während das Blasmodul und/oder das Füllermodul typischerweise ein vordefiniertes Layout aufweisen, welches aufgrund der Größe des Grundträgers bzw. den räumlichen Dimensionen des Reinraums und der zugehörigen Technik wenig Spielraum für Anpassungen ermöglicht, wie beispielsweise die zusätzliche Anordnung eines Orientierungssterns, einer Inspektionseinrichtung, einer Auswurfeinrichtung und dergleichen, kann durch eine entsprechende Ausgestaltung der Übergabeeinrichtung dies leicht ausgeglichen werden.

In der oben genannten Ausführungsform weist die Vorrichtung im Vergleich zu der Ausführungsform ohne Übergabeeinrichtung einen zusätzlichen Orientierungsstern auf. Es wäre auch denkbar, in der Übergabeeinrichtung eine zusätzliche Inspektionseinrichtung anzuordnen zur Überprüfung, ob die Kunststoffbehältnisse durch den Orientierungsstern korrekt ausgerichtet werden. Weiterhin ist es auch denkbar zusätzlich hierzu eine Auswurfeinrichtung vorzusehen, welche als fehlerhaft ausgerichtet identifizierte Kunststoffbehältnisse aus dem Transportpfad ausschleust.

Bei einer alternativen Ausführungsform ist ein erster Transportstern der Übergabeeinrichtung ein Teilungswechselstern. Diese Ausführungsform bietet den Vorteil, dass auf einen Teilungswechselstern als Teil des Füllermoduls verzichtet werden kann. Bei einer weiteren vorteilhaften Ausführungsform ist ein zweiter Transportstern der Übergabeeinrichtung ein Orientierungsstern. Auch hier bezieht sich die Nummerierung der Transportsterne als erster oder zweiter Transportstern nicht auf eine festgelegte Reihenfolge der Transportsterne.

Weiterhin ist die vorliegende Erfindung gerichtet auf ein Verfahren zum Betreiben einer Vorrichtung zum Behandeln von Kunststoffbehältnissen mit einer Transporteinrichtung, welche die Kunststoffbehältnisse entlang eines vorgegebenen Transportpfads transportiert. Weiterhin weist die Vorrichtung ein Blasmodul auf, welches eine Blasformmaschine zum Umformen von Kunststoffvorformlingen zu Kunststoffbehältnissen aufweist, wobei das Blasmodul auslaufseitig einen Transportstern aufweist, welcher bevorzugt als Teilungsverzugsstern ausgebildet ist. Weiterhin weist die Vorrichtung ein Füllermodul auf, welches eine Fülleinrichtung zum Befüllen von Kunststoffbehältnissen mit einem insbesondere flüssigen Produkt aufweist. Weiterhin weisen das Blasmodul und das Füllermodul eine Schnittstelle auf, welche eine Anordnung des Blasmoduls und des Füllermoduls aneinander ermöglicht und wobei die Kunststoffbehältnisse von dem Blasmodul an das Füllermodul übergeben werden, wobei die Vorrichtung innerhalb eines Reinraums angeordnet ist.

Erfindungsgemäß sind das Blasmodul und das Füllermodul unmittelbar aneinander angrenzend angeordnet und die Kunststoffbehältnisse werden direkt von dem Blasmodul an das Füllermodul übergeben.

Bei einem bevorzugten Verfahren werden die Kunststoffbehältnisse von einer Teilung der Blasformmaschine auf eine Teilung der Fülleinrichtung übergeben. Bevorzugt erfolgt ein Wechsel der Teilungsabstände durch den auslaufseitigen Teilungsverzugsstern des Blasmoduls und durch wenigstens einen Teilungsverzugsstern der Fülleinrichtung. Bei einem vorteilhaften Verfahren weist das Füllermodul einen Teilungswechselstern auf und die Kunststoffbehältnisse werden von einer Teilung des Blasmoduls auf eine Teilung des Füllermoduls übergeben.

Bevorzugt wechselt der Teilungswechselstern von jeder zweiten Teilung auf jede Teilung (2:1) oder von jeder Teilung auf jede Teilung (1:1). Bevorzugt ist der Teilungswechselstern manuell oder automatisch umschaltbar.

Wie bereits oben vorrichtungsseitig beschrieben, ist es durch die modulare Bauweise möglich, eine Übergabeeinrichtung zwischen dem Blasmodul und dem Füllermodul "einzuschieben". Daher ist die vorliegende Erfindung weiterhin gerichtet auf ein Verfahren zum Betreiben einer Vorrichtung zum Behandeln von Kunststoffbehältnissen mit einer Transporteinrichtung, welche die Kunststoffbehältnisse entlang eines vorgegebenen Transportpfads transportiert. Weiterhin weist die Vorrichtung ein Blasmodul auf, welches eine Blasformmaschine zum Umformen von Kunststoffvorformlingen zu Kunststoffbehältnissen aufweist, wobei das Blasmodul auslaufseitig einen Transportstern aufweist, welcher bevorzugt als Teilungsverzugsstern ausgebildet ist. Weiterhin weist die Vorrichtung ein Füllermodul auf, welches eine Fülleinrichtung zum Befüllen von Kunststoffbehältnissen mit einem insbesondere flüssigen Produkt aufweist, wobei die Kunststoffbehältnisse von dem Blasmodul an das Füllermodul übergeben werden, wobei die Vorrichtung innerhalb eines Reinraums angeordnet ist.

Erfindungsgemäß ist zwischen dem Blasmodul und dem Füllermodul eine Übergabeeinrichtung zum Übergeben der Kunststoffbehältnisse angeordnet und die Kunststoffbehältnisse werden durch die Übergabeeinrichtung von dem Blasmodul an das Füllermodul übergeben.

Bevorzugt weist das Füllermodul wenigstens drei Transportsterne auf, wobei wenigstens ein erster Transportstern des Füllermoduls ein Teilungsverzugsstern ist. Bevorzugt werden die Kunststoffvorformlinge von der Übergabeeinrichtung über die wenigstens drei Transportsterne des Füllermoduls an die Fülleinrichtung übergeben. Bevorzugt ist einer der Transportsterne des Füllermoduls ein Teilungswechselstern.

Bei einem vorteilhaften Verfahren weist die Übergabeeinrichtung wenigstens zwei Transportsterne auf. Bevorzugt handelt es sich bei einem der wenigstens zwei Transportsterne der Übergabeeinrichtung um einen Teilungswechselstern oder einen Orientierungsstern.

Bei einem vorteilhaften Verfahren werden die Kunststoffbehältnisse durch einen Teilungswechselstern des Füllermoduls von einer Teilung des Blasmoduls auf eine Teilung des Füllermoduls übergeben. Bei einem vorteilhaften Verfahren werden die Kunststoffbehältnisse durch einen Orientierungsstern der Übergabeeinrichtung ausgerichtet.

Bei einem alternativen vorteilhaften Verfahren werden die Kunststoffbehältnisse durch einen Teilungswechselstern der Übergabeeinrichtung von einer Teilung des Blasmoduls auf eine Teilung des Füllermoduls übergeben werden. Bevorzugt weist bei dieser Ausführungsform die Übergabeeinrichtung einen Orientierungsstern auf.

Weitere Vorteile und Ausführungsformen ergeben sich aus den beigefügten Zeichnungen. Darin zeigen:
- Fig. 1: eine erfindungsgemäße Vorrichtung in einer ersten Ausführungsform; und
- Fig. 2: eine erfindungsgemäße Vorrichtung in einer zweiten Ausführungsform.

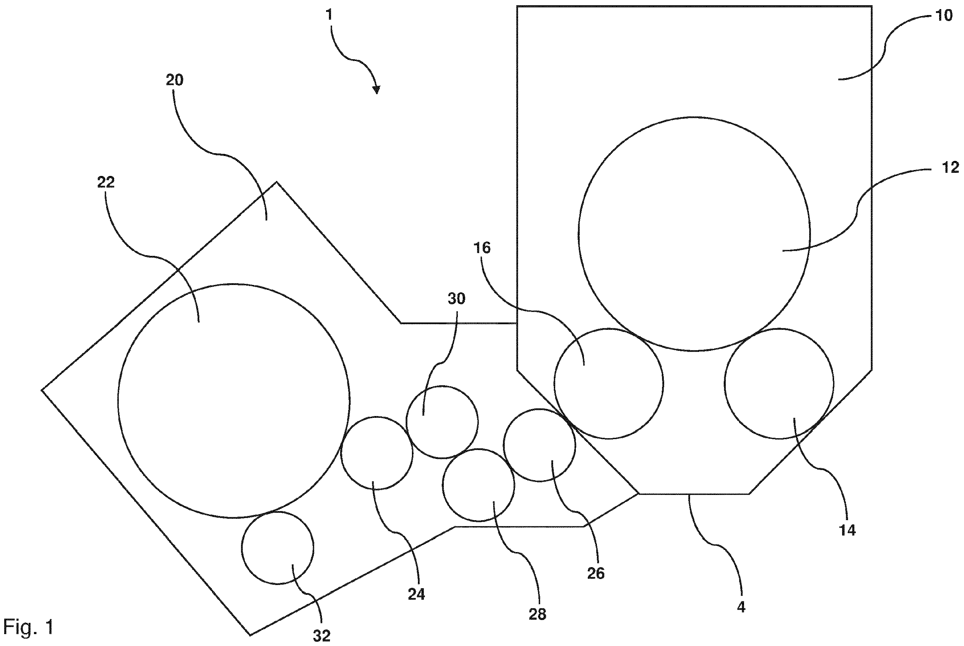

Figur 1 zeigt eine erfindungsgemäße Vorrichtung 1 gemäß einer ersten Ausführungsform. Gezeigt ist eine Anordnung von einem Blasmodul 10 und einem Füllermodul 20, welcher unmittelbar aneinander angrenzend angeordnet sind. Das Bezugszeichen 4 kennzeichnet hierbei schematisch die Reinraumgrenze. Die zwischen dem Blasmodul 10 und Füllermodul 20 verlaufende durchgängige Line stellt keine durchgängige Reinraumgrenze dar. Vielmehr sind die Reinräume der beiden Module im Bereich der Übergabe der Kunststoffbehältnisse zwischen dem Teilungsverzugsstern 16 des Blasmoduls 10 und dem Transportstern 26 des Füllermoduls 20 miteinander verbunden. Das Blasmodul 10 weist einen Einlaufstern 14 auf, über welchen zuvor erwärmte und sterilisierte Kunststoffvorformlinge der Blasformmaschine 12 zugeführt werden. Im Anschluss werden die fertig geblasenen Kunststoffbehältnisse von einem Teilungsverzugsstern 16 übernommen. In der hier gezeigten Ausführungsform schließt sich an das Blasmodul 10 direkt das Füllermodul 20 an. Das Füllermodul weist eine Fülleinrichtung 22 und mehrere Transportsterne auf. In dem gezeigten Ausführungsbespiel in Form von einem Einlaufstern 24 und drei Transportsternen 26, 28, 30, wobei ein Transportstern als Teilungswechselstern ausgebildet ist. Der Transportstern 24 (Einlaufstern) ist als Teilungsverzugsstern ausgestaltet und übergibt die zu befüllenden Kunststoffbehältnisse an die Fülleinrichtung 22. Somit werden die von der Blasformmaschine 12 hergestellten Kunststoffbehältnisse durch den Teilungsverzugsstern 16 (Auslaufstern) über die Transportsterne 24, 26, 28, 30 an die Fülleinrichtung 22 zur Befüllung mit einem insbesondere flüssigen Produkt übergeben, wobei sich an die Fülleinrichtung 22 ein Auslaufstern 32 anschließt. Im weiteren Verlauf (nicht gezeigt) können die befüllten Kunststoffbehältnisse weiter an eine Einrichtung zum Verschließen, zum Etikettieren, zum Verpacken und dergleichen übergeben werden.

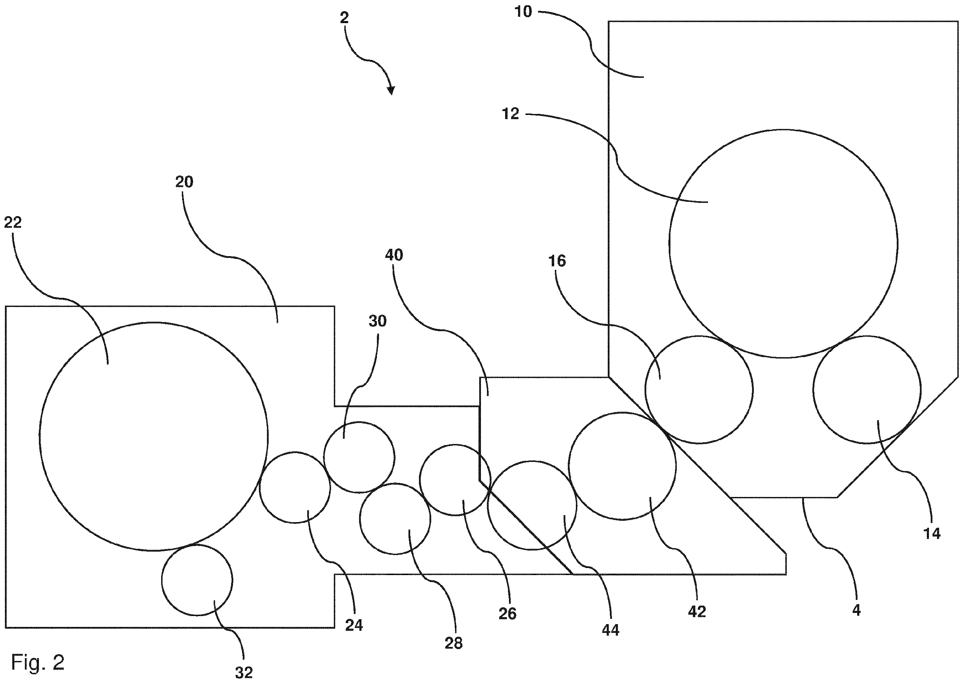

Figur 2 zeigt eine zweite Ausführungsform einer erfindungsgemäßen Vorrichtung 2. Im Unterscheid zu der in Figur 1 dargestellten Ausführungsform befindet sich zwischen dem Blasmodul 10 und dem Füllermodul 20 eine Übergabeeinrichtung 40. Das Bezugszeichen 4 kennzeichnet wiederum die Reinraumgrenze. Die Übergabeeinrichtung 40 weist zwei Transportsterne auf, welche in einer bevorzugten Ausführungsform als Orientierungsstern 42 und als Teilungswechselstern 44 ausgeführt sind. In diesem Fall werden die durch die Blasformmaschine 12 hergestellten Kunststoffbehältnisse durch den Teilungsverzugsstern 16 (Auslauf Blasmodul) an den Orientierungsstern 42 der Übergabeeinrichtung 40 übergeben. Der Orientierungsstern 42 dient dazu, die aus dem Blasmodul 10 übernommenen Kunststoffbehältnisse korrekt auszurichten. Darin schließt sich ein Teilungswechselstern 44 an. Nach dem Teilungswechselstern 44 werden die Kunststoffbehältnisse über die Transportsterne 26, 28, 30 an den Einlaufstern der Fülleinrichtung (Teilungsverzugsstern 24) übergeben. Bei einer alternativen Ausführungsform (nicht gezeigt) ist es denkbar, dass der Teilungswechselstern 44 nicht in der Übergabeeinrichtung angeordnet ist, sondern stattdessen einer der Transportsterne 26, 28, 30 als Teilungswechselstern ausgestaltet ist.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Vorrichtung
- 4: Reinraumgrenze
- 10: Blasmodul
- 12: Blasformmaschine
- 14: Einlaufstern Blasmodul
- 16: Auslaufstern Blasmodul, Teilungsverzugsstern
- 20: Füllermodul
- 22: Fülleinrichtung
- 24: Einlaufstern Fülleinrichtung, Teilungsverzugsstern
- 26, 28, 30: Transportsterne
- 32: Auslaufstern Fülleinrichtung
- 40: Übergabeeinrichtung
- 42: Orientierungsstern
- 44: Teilungswechselstern

## Patentansprüche

1. Vorrichtung (1) zum Behandeln von Kunststoffbehältnissen mit einer Transporteinrichtung, welche die Kunststoffbehältnisse entlang eines vorgegebenen Transportpfads transportiert, mit einem Blasmodul (10), welches eine Blasformmaschine (12) zum Umformen von Kunststoffvorformlingen zu Kunststoffbehältnissen aufweist und mit einen Füllermodul (20), welches eine Fülleinrichtung (22) zum Befüllen von Kunststoffbehältnissen mit einem insbesondere flüssigen Produkt aufweist, wobei das Blasmodul (10) und das Füllermodul (20) eine Schnittstelle aufweisen, welche eine Anordnung des Blasmoduls (10) und des Füllermoduls (20) aneinander ermöglicht und wobei die Kunststoffbehältnisse von dem Blasmodul (10) an das Füllermodul (20) übergebbar sind, wobei die Vorrichtung (1) innerhalb eines Reinraums angeordnet ist,
**dadurch gekennzeichnet, dass**
das Blasmodul (10) und das Füllermodul (20) unmittelbar aneinander angrenzend angeordnet sind, wobei das Blasmodul (10) auslaufseitig einen Transportstern (16) aufweist, welcher als Teilungsverzugsstern ausgebildet ist und die Kunststoffbehältnisse direkt von dem Teilungsverzugsstern (16) des Blasmoduls (10) an das Füllermodul (20) übergebbar sind.

2. Vorrichtung nach Anspruch 1,
**dadurch gekennzeichnet, dass**
das Füllermodul (20) wenigstens drei Transportsterne (26, 28, 30) aufweist, wobei ein erster Transportstern (26, 28, 30) des Füllermoduls (20) ein Teilungsverzugsstern ist und/oder ein zweiter Transportstern (26, 28, 30) des Füllermoduls (20) ein Teilungswechselstern ist.

3. Vorrichtung (2) zum Behandeln von Kunststoffbehältnissen mit einer Transporteinrichtung, welche die Kunststoffbehältnisse entlang eines vorgegebenen Transportpfads transportiert, mit einem Blasmodul (10), welches eine Blasformmaschine (12) zum Umformen von Kunststoffvorformlingen zu Kunststoffbehältnissen aufweist und mit einem Füllermodul (20), welches eine Fülleinrichtung (22) zum Befüllen von Kunststoffbehältnissen mit einem insbesondere flüssigen Produkt aufweist, und wobei die Kunststoffbehältnisse von dem Blasmodul (10) an das Füllermodul (20) übergebbar sind, wobei die Vorrichtung (2) innerhalb eines Reinraums angeordnet ist,
**dadurch gekennzeichnet, dass**
zwischen dem Blasmodul (10) und dem Füllermodul (20) eine Übergabeeinrichtung (40) zum Übergeben der Kunststoffbehältnisse angeordnet ist, wobei das Blasmodul (10) auslaufseitig einen Transportstern (16) aufweist, welcher bevorzugt als Teilungsverzugsstern ausgebildet ist.

4. Vorrichtung nach Anspruch 3,
**dadurch gekennzeichnet, dass**
das Füllermodul (20) wenigstens drei Transportsterne (26, 28, 30) aufweist, wobei wenigstens ein erster Transportstern (26, 28, 30) des Füllermoduls (20) ein Teilungsverzugsstern ist.

5. Vorrichtung nach Anspruch 3,
**dadurch gekennzeichnet, dass**
die Übergabeeinrichtung (40) wenigstens zwei Transportsterne (42, 44) aufweist.

6. Vorrichtung nach wenigstens einem der Ansprüche 3 bis 5,
**dadurch gekennzeichnet, dass**
ein zweiter Transportstern (26, 28, 30) des Füllermoduls (20) ein Teilungswechselstern ist und/oder ein erster Transportstern (42, 44) der Übergabeeinrichtung (40) ein Orientierungsstern ist.

7. Vorrichtung nach wenigstens einem der Ansprüche 3 bis 5,
**dadurch gekennzeichnet, dass**
ein erster Transportstern (42, 44) der Übergabeeinrichtung ein Teilungswechselstern ist.

8. Vorrichtung nach wenigstens einem der Ansprüche 3 bis 5,
**dadurch gekennzeichnet, dass**
ein zweiter Transportstern (42, 44) der Übergabeeinrichtung (40) ein Orientierungsstern ist.

9. Verfahren zum Betreiben einer Vorrichtung (1) zum Behandeln von Kunststoffbehältnissen mit einer Transporteinrichtung, welche die Kunststoffbehältnisse entlang eines vorgegebenen Transportpfads transportiert, mit einem Blasmodul (10), welches eine Blasformmaschine (12) zum Umformen von Kunststoffvorformlingen zu Kunststoffbehältnissen aufweist, wobei das Blasmodul (10) auslaufseitig einen Transportstern (16) aufweist, welcher bevorzugt als Teilungsverzugsstern ausgebildet ist und mit einem Füllermodul (20), welches eine Fülleinrichtung (22) zum Befüllen von Kunststoffbehältnissen mit einem insbesondere flüssigen Produkt aufweist, wobei das Blasmodul (10) und das Füllermodul (20) eine Schnittstelle aufweisen, welche eine Anordnung des Blasmoduls (10) und des Füllermoduls (20) aneinander ermöglicht und wobei die Kunststoffbehältnisse von dem Blasmodul (10) an das Füllermodul (20) übergeben werden, wobei die Vorrichtung (1) innerhalb eines Reinraums angeordnet ist,
**dadurch gekennzeichnet, dass**
das Blasmodul (10) und das Füllermodul (20) unmittelbar aneinander angrenzend angeordnet sind und die Kunststoffbehältnisse direkt von dem Blasmodul (10) an das Füllermodul (20) übergeben werden.

10. Verfahren nach Anspruch 9,
**dadurch gekennzeichnet, dass** das Füllermodul (20) einen Teilungswechselstern aufweist und die Kunststoffbehältnisse von einer Teilung des Blasmoduls (10) auf eine Teilung des Füllermoduls (20) übergeben werden.

11. Verfahren zum Betreiben einer Vorrichtung (2) zum Behandeln von Kunststoffbehältnissen mit einer Transporteinrichtung, welche die Kunststoffbehältnisse entlang eines vorgegebenen Transportpfads transportiert, mit einem Blasmodul (10), welches eine Blasformmaschine (12) zum Umformen von Kunststoffvorformlingen zu Kunststoffbehältnissen aufweist, wobei das Blasmodul (10) auslaufseitig einen Transportstern (16) aufweist, welcher bevorzugt als Teilungsverzugsstern ausgebildet ist und mit einem Füllermodul (20), welches eine Fülleinrichtung (22) zum Befüllen von Kunststoffbehältnissen mit einem insbesondere flüssigen Produkt aufweist, wobei die Kunststoffbehältnisse von dem Blasmodul (10) an das Füllermodul (20) übergeben werden, wobei die Vorrichtung (2) innerhalb eines Reinraums angeordnet ist,
**dadurch gekennzeichnet, dass**
zwischen dem Blasmodul (10) und dem Füllermodul (20) eine Übergabeeinrichtung (40) zum Übergeben der Kunststoffbehältnisse angeordnet ist und die Kunststoffbehältnisse durch die Übergabeeinrichtung (40) von dem Blasmodul (10) an das Füllermodul (20) übergeben werden.

12. Verfahren nach Anspruch 11,
**dadurch gekennzeichnet, dass**
die Übergabeeinrichtung (40) wenigstens zwei Transportsterne (42, 44) aufweist.

13. Verfahren nach wenigstens einem der Ansprüche 11 oder 12,
**dadurch gekennzeichnet, dass**
die Kunststoffbehältnisse durch einen Teilungswechselstern des Füllermoduls (20) von einer Teilung des Blasmoduls (10) auf eine Teilung des Füllermoduls (20) übergeben werden.

14. Verfahren nach Anspruch 13,
**dadurch gekennzeichnet, dass**
die Kunststoffbehältnisse durch einen Orientierungsstern der Übergabeeinrichtung (40) ausgerichtet werden.

15. Verfahren nach wenigstens einem der Ansprüche 11 oder 12,
**dadurch gekennzeichnet, dass**
die Kunststoffbehältnisse durch einen Teilungswechselstern der Übergabeeinrichtung (40) von einer Teilung des Blasmoduls (10) auf eine Teilung des Füllermoduls (20) übergeben werden.
